# EUROPEAN PATENT SPECIFICATION

(11) **EP 3 228 926 B1**
(45) Date of publication and mention of the grant of the patent: **07.07.2021**
(21) Application number: 17162309.3
(22) Date of filing: 22.03.2017
(51) Int. Cl.: F21S 41/16, F21S 41/176, F21S 41/26, F21S 41/365, F21S 41/37, F21S 43/16, F21S 43/20, F21S 43/31, F21V 7/26

(54) **LIGHTING DEVICE FOR VEHICLE**
BELEUCHTUNGSVORRICHTUNG FÜR FAHRZEUG
DISPOSITIF D'ÉCLAIRAGE POUR VÉHICULE

(30) Priority: 29.03.2016 US 201662314544 P; 09.06.2016 KR 20160071937
(43) Date of publication of application: 11.10.2017
(73) Proprietor: LG Electronics Inc., Yeongdeungpo-gu Seoul 07336 (KR)
(72) Inventor: PARK, Jun, Seoul 06772 (KR)
(74) Representative: Katérle, Axel

(56) References cited:
- EP-A1- 3 086 022
- WO-A1-2014/121707
- WO-A1-2015/098130
- DE-A1-102008 019 118
- DE-A1-102014 217 521
- KR-A- 20150 072 929
- US-A1- 2011 216 550
- US-A1- 2015 375 672
- Anonymous: "Laser Beam Collimation", , 2 April 2016 (2016-04-02), XP055400365, Retrieved from the Internet: URL:https://integratedoptics.com/laser-bea m-collimation [retrieved on 2017-08-22]

## Description

### BACKGROUND

### 1. Field

The present invention relates to a lighting device for a vehicle, and more specifically to a light device for a vehicle which one or more times reflects light irradiated from a light source and then projects the light to outside.

### 2. Background

A lighting device such as a lamp which causes a driver to secure visibility or can inform the current running state of the vehicle to the outside by increasing intensity of the illumination of the surrounding of the vehicle during running of the vehicle is installed in a vehicle.

The lighting device for a vehicle installed in the vehicle (hereinafter, referred to as "a lighting device for a vehicle") may be used to a head lamp which irradiates light to the front of the vehicle and a rear lamp which displays the heading direction of the vehicle, or indicates whether or not the brake is operated, or the like.

The lighting device for a vehicle may form a low beam or a high beam for securing visibility of a driver. Recently, use of an LED which has a high power efficiency and a long service life as a light source is gradually increased.

Meanwhile, it is possible to use a laser diode having a longer irradiation distance than the LED as a light source in the lighting device for a vehicle.

### Prior art document

### Patent Document

KR 10-2016-0012470 (published on February 03, 2016)

EP 3 086 022 A1 belongs to the state of the art according to article 54(3) EPC and relates to a light emitting module comprising a condensing lens for condensing incident light into a space; a light source for providing first light to pass through the condensing lens; a first optical path conversion member for reflecting the first light to provide first reflected light to pass through the condensing lens; a second optical path conversion member for reflecting the first reflected light to provide second reflected light to pass through the condensing lens; and a wavelength conversion unit for receiving the second reflected light, converting a wavelength of the received second reflected light, and radiating light the wavelength of which has been converted. The patent application WO2014/121707 A1 discloses a light source system with a laser diode, a lens, a first reflecting mirror disposed on the rear surface of the lens, and a phosphor layer attached to a second mirror.

### SUMMARY

An objective of the present invention is to provide a lighting device for a vehicle which is capable of minimizing the number of components and thus manufacturing to be compact.

The present invention provides a lighting device in accordance with claim 1. Preferred embodiments are defined in the dependent claims. The lighting device includes a light source; a lens in which the first reflecting unit is provided on a partial area of a front surface thereof; a light reducer which reduces the size of the cross section perpendicular to the optical axis of the beam of light emitted from the light source and is emitted the light toward the first reflecting unit; and a reflective fluorescent body which is disposed on the rear side of the lens and converts wavelength of light reflected from the first reflecting unit and then reflects the light into the lens.

The front surface of the lens may have a convex shape. The cross sectional shape of the first reflecting unit may be an arc shape.

The first reflecting unit may be a concave mirror which is formed in the front surface of the lens.

The first reflecting unit may be a reflective coating layer which is coated on the portion other than the optical axis of the lens in the front surface of the lens.

The reflective fluorescent body may be disposed on the rear side of the lens in a facing manner each other and may be capable of reflecting light toward a rear surface of the lens.

The light reducer may be disposed between the lens and the light source.

The reflective fluorescent body may be disposed on the optical axis of the lens and the light reducer may be spaced apart from the optical axis of the lens.

The light reducer may be disposed on the rear side of the lens and may emit light in a direction parallel to the optical axis of the lens.

The light reducer may include a first reducer lens in which the size of the cross section perpendicular to the optical axis of light is reduced while the light emitted from the light source transmits through the first reducer lens and a second reducer lens which is spaced apart the first reducer lens and in which the size of the cross section perpendicular to the optical axis of light is reduced while the light emitted from the first reducer lens transmits through the second reducer lens.

An emitting surface of the first reducer lens and an incident surface of the second reducer lens may be spaced apart from each other.

The diameter of the second reducer lens may be smaller than the diameter of the first reducer lens.

The thickness of the second reducer lens may be thinner than the thickness of the first reducer lens.

The incident surface of the first reducer lens, on which light may be incident has a convex shape.

The emitting surface of the second reducer lens, from which light may be emitted has a concave shape.

The optical lens of the first reducer lens and the optical lens of the second reducer lens may be same with each other.

The incident surface of the first reducer lens faces the light source, and an emitting surface of the second reducer lens faces the rear surface of the lens.

The optical axis of the first reducer lens may intersect with the optical axis of the second reducer.

An embodiment of the preset invention may further include a reflecting member which reflects the light emitted from the first reducer lens to the second reducer lens.

The reflective fluorescent body may be disposed on the optical axis of the lens and the light reducer may be spaced apart from the reflective fluorescent body in the optical axis of the lens.

An embodiment of the preset invention may further include a second reflecting unit which is provided to be spaced apart from the first reflecting unit and reflects light reflected from the reflective fluorescent body to the rear side of the lens.

According to an embodiment of the present invention, the light of which size of the cross section perpendicular to the optical axis of light is reduced by a reducer is incident on the first reflecting unit and then reflected to the reflective fluorescent body, and thus the size of the lens is minimized and lens can make compact. Further, the first reflecting unit is provided on some area of the front surface of the lens and thus the number of components is minimized and the lens can be made compact.

### BRIEF DESCRIPTION OF THE DRAWINGS

Fig. 1 is a construction view illustrating a lighting device for a vehicle according to a first embodiment of the present invention,
Fig. 2 is a construction view illustrating an optical path of the lighting device for a vehicle according to the first embodiment of the present invention,
Fig. 3 is a perspective view illustrating the lighting device for a vehicle according to the first embodiment of the present invention,
Fig. 4 is a construction view illustrating a lighting device for a vehicle according to a second embodiment of the present invention,
Fig. 5 is a construction view illustrating a lighting device for a vehicle according to a third embodiment of the present invention,
Fig. 6 is a construction view illustrating an optical path of the lighting device for a vehicle according to a fourth embodiment of the present invention, and
Fig. 7 is a construction view illustrating an optical path of the lighting device for a vehicle according to a fifth embodiment of the present invention.

### DETAILED DESCRIPTION OF THE EMBODIMENTS

Hereinafter, a specific embodiment of the present invention will be described in detail with reference to the drawing.

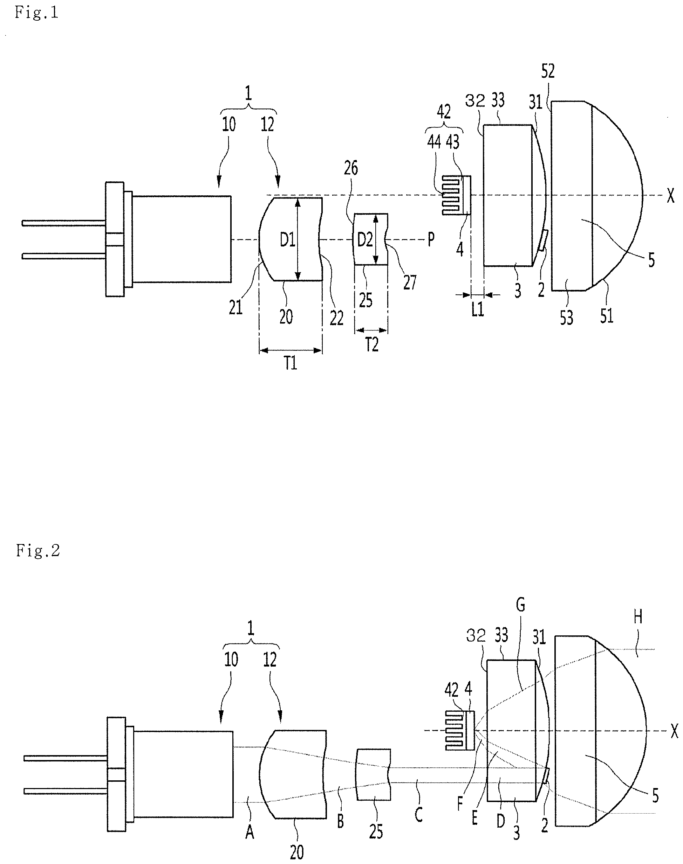

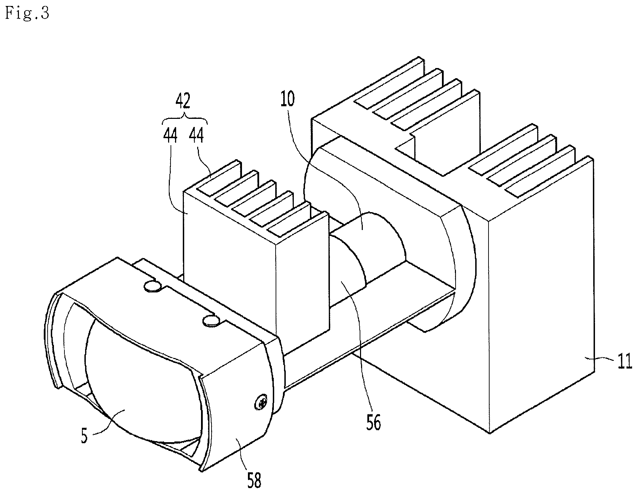

Fig. 1 is a construction view illustrating a lighting device for a vehicle according to a first embodiment of the present invention, Fig. 2 is a construction view illustrating an optical path of the lighting device for a vehicle according to the first embodiment of the present invention, and Fig. 3 is a perspective view illustrating the lighting device for a vehicle according to the first embodiment of the present invention.

The lighting device for a vehicle may include a light source mechanism 1, a first reflecting unit 2, a lens 3, and a reflective fluorescent body 4.

The lighting device for a vehicle may constitute a head lamp of the vehicle and may be used as a high beam lighting device which generates a high beam or may be used as a low beam lighting device which generates a low beam.

The light source mechanism 1 is capable of emitting light toward the first reflecting unit 2. The lighting device 1 is capable of emitting light toward the lens 3 and the light emitted toward the lens 3 transmits the lens 3 and may be incident to the first reflecting unit 2. The lighting device 1 is capable of emitting light toward a rear surface of the lens 3 and the light which is incident on the rear surface of the lens 3 from the lighting device 1 transmits through the lens 3 and then may be is incident to the rear surface of the first reflecting unit 2.

The light source mechanism 1 may be include the light source 10. The light source 10 may receives electric energy and then may converts the electric energy into light energy, and may be a light emitting source such as an ultra high pressure mercury lamp, a light emission diode (LED), and a laser diode.

A light source 10 preferably is a light source which is capable of being irradiated with light from a long distance while having an excellent feature of straightness and high efficiency. Also, the light source preferably is a laser diode. The laser diode which is a light source preferably is a laser diode which irradiates with a blue based laser light having high efficiency.

A heat radiation member 11 which radiates heat generated in the light source 10 is connected to the light source 10 as illustrated in Fig. 3. The heat radiation member 11 may includes a contact plate which is in contact with the light source 10 and a heat radiation fin which is projected from the contact plate.

The light source mechanism 1 may further include a reducer which reduces the size of the cross section perpendicular to the optical axis of light emitted from the light source 10 and then emits the light toward the first reflecting unit 2. The light emitted from the light source 10 passed through the reducer and then may be emitted toward the first reflecting unit 2. The detail description of the reducer 12 will be described below.

The lens 3 may have a larger size than the size of the reflective fluorescent body 4 and the first reflecting unit 2 and is capable of protecting the reflective fluorescent body 4 and the first reflecting unit 2 at the front side of the reflective fluorescent body 4.

The lens may have a cylindrical shape or polygonal pillar shape. The lens 3 may include a front surface 31, a rear surface 32, and a peripheral surface 33.

The front surface 31 of the lens 3 may have a convex curved surface toward the front side and the rear surface 32 of the lens 3 may have a flat surface or a recessed curved surface toward the front side.

The lens 3 may include an optical axis X. The front surface 31 of the lens 3 is a convex condensing lens and the front surface 31 of the lens 3 may be symmetrical the optical axis X. Here, the optical axis X of the lens 3 may be a rotational symmetrical axis or a center axis of the lens 3 and may mean a straight line which passes through the centers of the front surface 31 and the back surface 32 and the lens 3.

The lighting device for a vehicle may further include a projection lens 5 which is to be disposed on the front surface of the lens 3.

The projection lens 5 may have a greater size than the size of the lens 3. The optical axis of the projection lens 5 can be matched with the optical axis X of the lens 3.

The projection lens 5 may include a front surface 51, a rear surface 52, and a peripheral surface 53. The front surface 51 of the projection lens 5 may be a convex surface toward the front side. The rear surface 52 of the projection lens 5 may be a flat surface. The projection lens 5 has a symmetrical structure about the optical axis.

The reflective fluorescent body 4 may be disposed on the rear side of the lens 3 and reflect from the first reflecting unit 2 and reflect to the lens 3.

Heat is generated at the reflective fluorescent body 4 at the time of wavelength conversion of the light and thus preferably is disposed to be separated from the lens 3. The reflective fluorescent body 4 is disposed on the rear side of the lens 3 to be spaced apart from the lens 3.

The reflective fluorescent body 4 may be disposed to be face the rear surface 32 of the lens 3 and may reflect light toward the rear surface 32 of the lens 3.

The reflective fluorescent body 4 may be disposed on the optical axis X of the lens 3 to be spaced apart from the rear surface 32 of the lens 3. The front surface of the reflective fluorescent body 4 is parallel to the rear surface 32 of the lens 3.

The reflective fluorescent body 4 is capable of being eccentrically disposed with respect to the optical axis X of the lens 3 in addition to being disposed on the optical axis X of the lens 3. However, in this case, the efficiency is low because an area of lens through which light reflected at the reflective fluorescent body 4 is transmitted is smaller than the area in a case where the reflective fluorescent body 4 is disposed on the optical axis X of the lens 3.

Further, in a case where the reflective fluorescent body 4 may be disposed to be eccentric with respect to the optical axis X of the lens 3 in addition to the optical axis X of the lens, the area through which light reflected from the reflective fluorescent body 4 is transmitted and the other area in the projection lens 5 may be asymmetrical. In this case, the manufacturing process of the projection lens 5 complicates and thus the manufacturing cost of the projection lens 5 may be increased.

However, when the reflective fluorescent body 4 is disposed on the optical axis X of the lens 3, the projection lens 5 is formed to be symmetrical about the optical axis and thus the manufacturing cost of the projection lens 5 may be reduced.

In other words, the reflective fluorescent body 4 is preferably disposed on the optical axis X of the lens 3.

The reflective fluorescent body 4 may includes a wavelength conversion layer which faces the rear surface 32 of the lens 3 and a reflecting unit which is disposed on the rear side of the wavelength conversion layer.

The wavelength conversion layer may be made of a wave conversion film and may include an opto ceramic. The wavelength conversion layer is capable to converting the wavelength of the light reflected at the first reflecting unit 2 in a state of being positioned at the front side of the reflecting unit. When the blue based light is incident from the outside, the wavelength conversion layer may be a wavelength conversion film which converts into the yellow based light. The wavelength conversion layer may include an opto ceramic having yellow color.

The reflecting unit may include a plate and a reflecting coating layer which is coated the outside surface of the plate. The plate made of a metal. The reflecting unit may support the wavelength conversion layer and light transmitted through the wavelength conversion layer may be reflected toward the rear surface 32 of the lens 3 by the reflect unit.

When blue based light is reflected to the reflective fluorescent body 4 by the first reflecting unit 2 in the surface of the wavelength conversion layer, a portion of the blue based light is surface-reflected and the light which is incident on the inner portion of the wavelength conversion layer of the blue based light is capable of being excited in the inner portion of the wavelength conversion layer and the light may be reflected in the front side of the wavelength conversion layer by the reflecting unit.

The blue based light which is surface-reflected from the surface of the wavelength conversion layer and yellow based light which is emitted to the front side of the wavelength conversion layer may be mixed and white based light is emitted to the front side of the front surface of the reflective fluorescent body 4. This white based light may be transmitted through the lens 2 3 and may be emitted toward the front side of the lens 2 3.

A distance L1 between the reflective fluorescent body 4 and the lens 3 may determine the width of the lighting device for a vehicle in the longitudinal direction, and preferably, the reflective fluorescent body 4 is closely disposed to the lens 3 within the range in which the damage of the lens 3 by heat is minimized.

The heat radiating member 42 which assists to radiate heat of the reflective fluorescent body 4 may be disposed in the reflective fluorescent body 4. The heat radiation member 42 may includes a contact plate 43 which is in contact with the reflective fluorescent body 4, and a heat radiation fin 44 which is projected from the contact plate 43.

The contact plate 43 may be attached to the rear surface of the reflecting unit to be surface-contact.

Meanwhile, the first reflecting unit 2 may be provided to reflect the incident light to the reflective fluorescent body 4.

The first reflecting unit 2 is capable of being provided to lens 3 to be integrated with the lens 3 or is capable of being provided separately from the lens 3 spaced apart from the lens 3.

The first reflecting unit 2 may be determined the position thereof according to a arrangement position of the reflective fluorescent body 4. In a case where the reflective fluorescent body 4 may be disposed on the rear side of the lens 3, the first reflecting unit 2 is positioned on the rear side of the lens 3 to be spaced apart from the lens 3, provided on the rear surface of the lens 3, is provided on the front surface of the lens or is positioned on the front side of the lens 3 to be spaced apart from the lens 3.

The first reflecting unit 2 allows the light emitted from the light source device 1 to reflect between the reflective fluorescent body 4 and the lens 3, in a state where the first reflecting unit 2 is provided on the rear side of the lens 3 to be spaced apart from the lens 3.

The first reflecting unit 2 allows the beam emitted from the light source 1 to reflect between the reflective fluorescent body 4 and the lens 3, in a state where the first reflecting unit 2 is provided on the rear surface of the lens 3 to be integrated with the lens 3.

The first reflecting unit 2 allows the light transmitted through the lens 3 after being emitted from light source device 1 to reflect to the lens 3 to be reflected toward on the reflective fluorescent body 4, in a state where the first reflecting unit 2 is provided on the front surface of the lens 3 to be integrated with the lens 3.

The first reflecting unit 2 allows the beam transmitted through the lens 3 after being emitted from light source device 1 to reflect to the lens 3 to be reflected toward on the reflective fluorescent body 4, in a state where the first reflecting unit 2 is provided on the front side of the lens 3 to be spaced apart from the lens 3.

In a case where the first reflecting unit 2 is provided the rear side or the front side of the lens 3 to be spaced apart from lens 3, the component number of the lighting device for a vehicle may be increased and the size of the lighting device for a vehicle may be increased by the separating distance between the lens 3 and the first reflecting unit 2 from each other.

Preferably, the first reflecting unit 2 is provided in the front surface 31 or the rear surface 32 of the lens to be integrated with each other for the minimized component number of the lighting device for a vehicle and for the compactness of the lighting device for a vehicle.

In a case where the first reflecting unit 2 is provided on all the rear surface or all the front surface of the lens, the first reflecting unit 2 allows all the light reflected from the reflective fluorescent body 4 to be reflected to rear side of the lens 3 and allows the light reflected from the reflective fluorescent body 4 not to be emitted in the front side of the lens 3.

In other words, preferably, the first reflecting unit 2 is provided on a portion of the rear surface of the lens 3 or a portion of the front surface of the lens 3. Preferably, the first reflecting unit 2 has a size that the lens 3 is capable of securing the sufficient light emitting area. Preferably, the first reflecting unit 2 is positioned at the portion other than the optical axis X of the lens. Preferably, the first reflecting unit 2 is positioned between the optical axis X of the lens 3 and the perimeter surface 33 of the lens 3.

The first reflecting unit 2 may be provided on a portion area of the rear surface of the lens 3 or a portion area of the front surface of the lens 3. The first reflecting unit 4 may be provided to reflect the light emitted from the light source device 1 to the reflective fluorescent body 4.

Preferably, the first reflecting unit 2 may reflect the incident light to the rear side of the lens 3.

The first reflecting unit 2 may be determined the position thereof considering distance between reflective fluorescent body 4 and lens 3.

Preferably, since reflective fluorescent body 4 is disposed so as to close the rear surface 32 of the lens 3, the first reflecting unit 2 is provided on the front surface 31 of the lens 3.

In other words, the first reflecting unit 2 may be provided on some area of the front surface of the lens 3 and the light emitted from the light source device 1, in particular the reducer 12 may be transmitted through the lens 3 and then may be incident on the first reflecting unit 2. The light reflected from the first reflecting unit 2 may be transmitted through the lens 3 and may be incident on the reflective fluorescent body 4. The light of which wavelength is changed by the reflective fluorescent body 4 may be transmitted through the lens 3 and may be irradiated to the front side. The lens 3 may be three-path lens through which light is transmitted three times. The lighting device for a vehicle can be made compact by the three-path lens.

The first reflecting unit 2 is formed according to a convex front surface 31 in a portion of a convex front surface 31 of the lens 3 and the cross-sectional shape of the first reflecting unit 2 may be formed as an arc-shape. The first reflecting unit 2 may be a round shape or a polygonal shape when viewing from the front side of the lens 3.

The first reflecting unit 2 may be a concave mirror formed on the front surface 31 of the lens 3. The first reflecting unit 2 may have a convex front surface and a concave rear surface.

The front surface of the first reflecting unit 2 may faces the projection lens 5 described below. The first reflecting unit 2 may be projected by the lens 3 and the projection lens 5 between the lens 3 and the projection lens 5.

The first reflecting unit 2 may be a reflective coating layer coated on the portion other than the optical axis X of the lens 3 of the front surface 31 of the lens 3. Alternatively, the first reflecting unit 2 may be a reflective sheet attached to the portion other than the optical axis X of the lens 3 of the front surface 31 of the lens 3.

The light reducer 12 may be disposed between the lens 3 and the light source 10. The light reducer 12 is disposed between the rear surface 32 of the lens 3 and the front surface 31 of the light source 10 to be spaced apart from the lens 3 and the light source 10 respectively.

The light reducer 12 is spaced apart from the optical axis X of the lens 3. A portion of the light reducer 12 may be positioned on the optical axis X of the lens 3. However, the optical axis P of the light reducer 12 is spaced apart from the optical axis X of the lens 3.

The light reducer 12 is disposed on the rear side of the lens 3 and may emit light in the direction parallel to the optical axis X of the lens 3. The optical axis P of the light reducer 12 may be parallel to the optical axis X of the lens 3.

The light reducer 12 may include a first reducer lens 20 in which the size of the cross section perpendicular to the optical axis of light is reduced while the light emitted from the light source 10 transmits through the first reducer lens 20 and a second reducer lens 30 which is spaced apart from the first reducer lens 20 and in which the size of the cross section perpendicular to the optical axis of light is reduced while the light emitted from the first reducer lens 20 transmits through the second reducer lens 30.

The first reducer lens 20 has an incident surface 21 and an emitting surface 22 and the second reducer lens 25 has an incident surface 26 and an emitting surface 27.

The emitting surface 22 of the first reducer lens 20 and the incident surface 26 of the second reducer lens 25 is space apart from each other. The emitting surface 22 of the first reducer lens 20 and the incident surface 26 of the second reducer lens 25 may be space apart in the direction parallel to the optical axis X of the lens 3. The first reducer lens 20 and the second reducer lens 25 may be spaced apart having air between the first reducer lens 20 and the second reducer lens 25.

The first reducer lens 20 and the second reducer lens 25 may be spaced apart in the longitudinal direction. The emitting surface 22 of the first reducer lens 20 and the incident surface 26 of the second reducer lens 25 is space apart in the longitudinal direction.

The first reducer lens 20 may be positioned between the light source 10 and the second reducer lens 25 and the second reducer lens 25 may be positioned between the first reducer lens 20 and the lens 3.

The incident surface 21 of the first reducer lens 20 may face the light source 10.

The optical axis P of the first reducer lens 20 and the optical axis of the second reducer lens 25 may be the same each other.

The emitting surface 27 of the second reducer lens 25 may face the rear surface 32 of the lens 3. Preferably, the emitting surface 27 of the second reducer lens 25 does not face a heat radiating member 42 or the reflective fluorescent body 4.

The incident surfaces, on which light is incident, of first reducer lens 20 and the second reducer lens 25 may have a convex shape. The emitting surfaces, from which light is emitted, of first reducer lens 20 and the second reducer lens 25 may have a concave shape.

The rear surface of the first reducer lens 20 may be the incident surface 21 and the incident surface 21 may have a convex curved surface toward the rear side. The light which is incident from the light source 10 may be refracted at the convex incident surface 21 and the size of the cross section perpendicular to the optical axis of light which transmits through the first reducer lens 20 may be gradually reduced, as illustrated in Fig. 2.

The front surface of the first reducer lens 20 may be the emitting surface 22 and the emitting surface 22 may have a concave depression curved surface toward the rear side. The entire front surface of the first reducer lens 20 may have a concave depression emitting surface 22. Only the center portion of the front surface of the first reducer lens 20 may have the concave depression emitting surface 22.

A portion of the emitting surface 22 of the first reducer lens 20 may face the incident surface 26 of the second reducer lens 25.

The rear surface of the second reducer lens 25 may be the incident surface 26 and the incident surface 26 may have a convex curved surface toward the rear side. The light which is emitted from the first reducer lens 20 and then passes through the air between the first reducer lens 20 and the second reducer lens 25 may be refracted at the convex incident surface 26 of the second reducer lens 25, and the the size of the cross section perpendicular to the optical axis of light transmitted through the second reducer lens 25 may be gradually reduced.

The front surface of the second reducer lens 25 may be the emitting surface 27 and the emitting surface 27 may have a concave depression curved surface toward the rear side. The entire front surface of the second reducer lens 20 may have a concave depression emitting surface 27. Only the center portion of the front surface of the first reducer lens 20 may have the concave depression emitting surface 27.

The entire emitting surface 27 of the second reducer lens 25 may face the rear surface 32 of the lens 3.

The diameter D2 of the second reducer lens 25 may be smaller than the diameter D1 of the first reducer lens 20. The thickness T2 of the second reducer lens 25 may be thinner than the thickness T1 of the first reducer lens 20.

The size of the second reducer lens 25 may be smaller than the size of the first reducer lens 20 in order to increase the peripheral space utilization, since the light is primarily reduced at the first reducer lens 20.

The curvatures of the incident surface 21 of the first reducer lens 20 and the incident surface 26 of the second reducer lens 25 may be the same each other or may be different from each other.

The reduction degree of the size of the cross section perpendicular to the optical axis of light which is transmitted through the first reducer lens 20 may be highly dependent on the curvature of the incident surface 21 of the first reducer lens 20. The reduction degree of the size of the cross section perpendicular to the optical axis of light which is transmitted through the first reducer lens 20 may be increased as the curvature of the incident surface 21 of the first reducer lens 20 is increased.

In other words, the sizes of the second reducer lens 25, the first reflecting unit 2, and the lens 3 may be decreased as the curvature of the incident surface 21 of the first reducer lens 20 is increased.

The light of which the size of the cross section perpendicular to the optical axis of light is primarily reduced at the first reducer lens 20 may be incident on the incident surface 26 of the second reducer lens 25 and the incident surface 2 of the second reducer lens 25 is preferably configured that the light is not excessively reduced.

In a case where the curvature of the incident surface 21 of the first reducer lens 20 and the curvature of the incident surface 26 of the second reducer lens 25 are different from each other, preferably, the curvature of the incident surface 21 of the first reducer lens 20 is greater than the curvature of the incident surface 26 of the second reducer lens 25.

The curvatures of the emitting surface 22 of the first reducer lens 20 and the emitting surface 27 of the second reducer lens 25 may be the same each other or may be different from each other.

The first reducer lens 20 is capable of differentiating the size of the cross section perpendicular to the optical axis of light emitted from the first reducer lens 20 according to the curvature of the emitting surface 22.

The emitting surface 22 of the first reducer lens 20 may have a curvature which allows the light which passes through the emitting surface 22 to be emitted in parallel. Further, the emitting surface 22 of the first reducer lens 20 may have a curvature which allows the size of the cross section perpendicular to the optical axis of light passed through the emitting surface 22 to be gradually reduced between the emitting surface 22 of the first reducer lens 20 and the incident surface 26 of the second reducer lens 25.

Preferably, the second reducer lens 25 is configured that the size of the cross section perpendicular to the optical axis of light which is incident on the first reflecting unit 2 may be different from each other according to the curvature of the emitting surface and the emitting surface 27 of the second reducer lens 20 is configured that the light passed through the emitting surface 27 is incident on the reflecting unit 2 in parallel.

In a case where the curvature of the emitting surface 22 of the first reducer lens 20 and the curvature of the emitting surface 27 of the second reducer lens 22 are different from each other, preferably, the curvature of the emitting surface 27 of the second reducer lens 25 is greater than the curvature of the emitting surface 22 of the first reducer lens 20.

Meanwhile, the lighting device for a vehicle may further include a light reducer supporter 56 (see Fig. 3) supporting the light reducer 12.

The light reducer supporter 56 may have a shape surrounding the light reducer 12. The light reducer supporter 56 may be lengthened in the direction parallel to the optical axis X of the lens 3 and may have a light transmitting path through which light transmits in the inner portion thereof.

Further, the lighting device for a vehicle may further include a lens holder 58 which supports the lens 3 and the projection lens 5.

Hereinafter, an operation of the present invention having the configuration as above will be described as follow. Hereinafter, the light source 10 emits the blue based light and the reflective fluorescent body 4 converts the wavelength of the blue based light into the wavelength of the yellow based light, for example.

First, when the light source 10 turns on, the blue based light A may be emitted from the light source 10 and the light. A emitted from the light source 10 may be incident on the light reducer 12 in parallel.

The light A emitted from the light source 10 in parallel may be incident on the incident surface 21 of the first reducer lens 20, may refract at the incident surface 21 of the first reducer lens 20 and then the size of the cross section perpendicular to the optical axis of light may be reduced.

The light refracted at the emitting surface 21 of the first reducer lens 20 may transmit through the first reducer lens 20 and thus may be emitted to the emitting surface 22 of the first reducer lens 20.

The light B emitted to the emitting surface 22 of the first reducer lens 20 is incident on the incident surface 26 of the second reducer lens 25 in parallel or the size of the cross section perpendicular to the optical axis of light B is gradually reduced between the emitting surface 22 of the first reducer lens 20 and the incident surface 26 of the second reducer lens 25 and the light B may be incident on the incident surface 26 of the second reducer lens 25.

The light which is incident on the incident surface 26 of the second reducer lens 25 may transmit through the second reducer lens 25 and thus may be emitted through the emitting surface 27 of the second reducer lens 25.

In other words, the light A emitted from the light source 10 sequentially transmits through the first reducer lens 20, the air between the first reducer lens 20 and the second reducer lens 25, and the second reducer lens 25 and thus the size of the cross section perpendicular to the optical axis of light is reduced, and the light C of which the size of the cross section perpendicular to the optical axis of light is reduced may be incident on the rear surface 32 of the lens 2 in parallel.

The light D which is incident on the rear surface 32 of the lens 3 transmits through the rear side area of the first reflecting unit 2 of the lens 3 and may be incident on the rear surface of the first reflecting unit 2, and then reflects from the rear surface of the first reflecting unit 2 to the lens 3.

The light E reflected from the first reflecting unit 2 may be reflected in the direction toward the optical axis X of the lens [[2]] 3 and may refract at the rear surface 32 of the lens 3.

The light F refracted at the rear surface 32 of the lens 3 may be passed through between the rear surface 32 of the lens 3 and the reflective fluorescent body 4 and then may be incident on the reflective fluorescent body 4.

The wavelength of the light which is incident on the reflective fluorescent body 4 may be changed by the reflective fluorescent body 4 and the white based light F may be irradiated to the rear surface 32 of the lens 3.

The light irradiated from the reflective fluorescent body 4 to the rear surface 32 of the lens 3 in the reflective fluorescent body 4 may transmit through the lens 3, and the light G transmits through the front surface 31 of the lens 31 and then may be incident on the projection lens 5 through the rear surface 52 of the projection lens 5.

The light which is incident on the projection lens 5 transmits through the projection lens 5, refracts at the front surface 51 of the projection lens 5 and thus may be emitted in the front side of the projection lens 5 in parallel.

The light H emitted to the front side of the projection lens 5 may be irradiated in the front side of the vehicle.

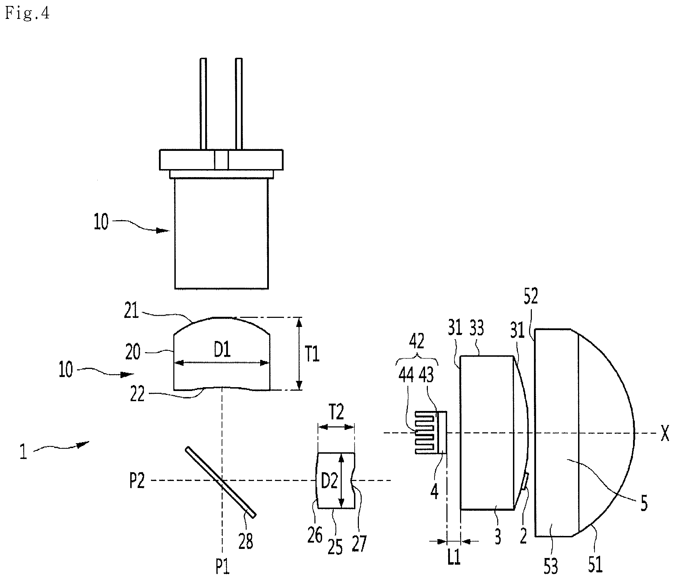

Fig. 4 is a construction view illustrating a lighting device for a vehicle according to a second embodiment of the present invention.

In the present embodiment, the optical axis PI of the first reducer lens 20 intersects with the optical axis P2 of the second reducer lens 25.

An embodiment of the preset invention may further include a reflecting means 28 which reflects the light emitted from the first reducer lens 20 to the second reducer lens 30.

The optical axis PI of the first reducer lens 20 and the optical axis P2 of the second reducer lens 30 may have a inclined angle which is an acute angle or an obtuse angle, or may be perpendicular to each other.

The light of which the size of the cross section perpendicular to the optical axis of light is reduced by the first reducer lens 20 may be incident on the second reducer lens 25, and the size of the cross section perpendicular to the optical axis of light is reduced again at the second reducer lens 25 by the reflecting means 28.

The incident surface 21 of the first reducer lens 20 may face the light source 10.

The emitting surface 22 of the first reducer lens 20 and the incident surface 28 of the second reducer lens 26 may face with each other.

The emitting surface 27 of the reducer lens 25 may face the rear surface 32 of the lens 3. The optical axis P2 of the second reducer lens 25 is parallel to the optical axis of the lens 3. The light emitted through the emitting surface 27 of the second reducer lens 25 may be irradiated toward the first reflecting unit 2 provided on the front surface 31 of the lens 3 as in the first embodiment of the present invention.

The curvatures of the incident surface and the emitting surface, size relation between each other, and thickness relation between each other of each of the first reducer lens 20 and the second reducer lens 25 are same or similar to those of the first embodiment of the present invention. Accordingly, the detailed description is omitted in order to avoid duplicate description.

In a case of the present invention, the light source 10 and the first reducer lens 20 may not disposed on the rear side of the second reducer lens 25 and the first reducer lens 20 and the light source 10 may not relatively disposed on the more front side than in the case of the first embodiment of the present invention.

The light emitted from the light source 10 passes through the first reducer lens 20 and then may be incident on the reflecting member 28, the light path is changed in parallel to the optical axis X of the lens 3 by the reflecting member 28, and may be transmitted through the second reducer lens 25 and then may be emitted toward the first reflecting unit 2.

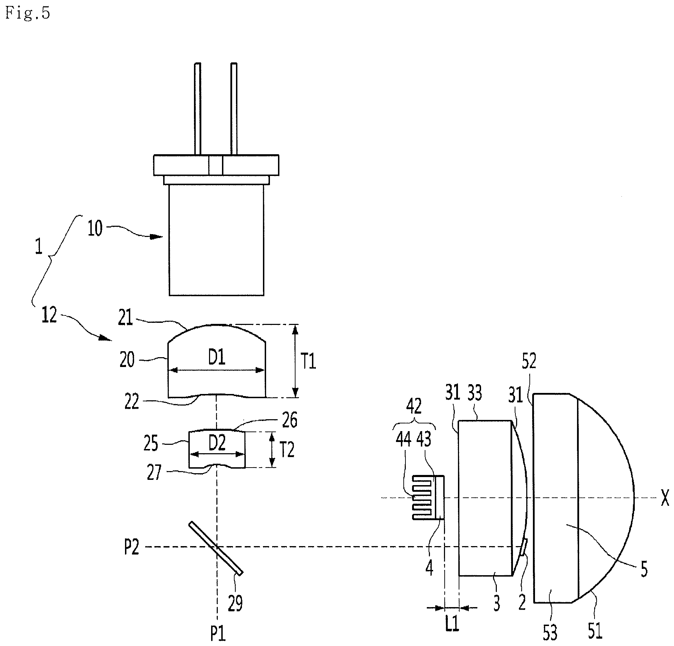

Fig. 5 is a construction view illustrating a lighting device for a vehicle according to a third embodiment of the present invention.

In the present embodiment, at least one of the light source 10 and the light reducer 12 may be disposed to be spaced apart from the reflective fluorescent body 4 on the optical axis X of the lens 3. Since another configurations other than at least one position of the light source 10 and the light reducer 12 is same or similar to the first embodiment or the second embodiment of the present invention, the configurations use the same reference numerals. Accordingly, detailed description thereof will be omitted.

In the present embodiment, the optical axis PI of the light reducer 12 is intersected with the optical axis X of the lens 3. The present embodiment further comprises a reflecting member 29 which reflects the light emitted from the light reducer 12 toward the first reflecting unit 2.

As in the first embodiment of the present invention, the light reducer 12 may include a first reducer lens 20 and a second reducer lens 25. The first reducer lens 20 and the second reducer lens 25 may have the same light axis PI with each other.

The light of which the size of the cross section perpendicular to the optical axis of light is reduced by the first reducer lens 20 and the second reducer lens 25 may be incident on the lens 3 by the reflecting member 29 and transmitted through the lens 3 and then may be incident on the first reflecting unit 2.

The incident surface 21 of the first reducer lens 20 may face the light source 10.

The emitting surface 22 of the first reducer lens 20 and the incident surface 26 of the second reducer lens 25 may face each other.

The emitting surface 27 of the second reducer lens 25 may face each other.

The reflecting member 29 may reflect the light emitted from the second reducer lens 25 in parallel direction P2 to the optical axis X of the lens 3 and the light reflected from the reflecting member 29 may be irradiated toward the first reflecting unit 2 provided on the front surface 31 of the lens 3 as in the first embodiment of the present invention.

The curvature of the incident surface and the emitting surface, size relation between each other, and thickness relation between each other of each of the first reducer lens 20 and the second reducer lens 25 are same or similar to those of the first embodiment of the present invention. Accordingly, the detailed description is omitted in order to avoid duplicate description.

In a case of the present embodiment, the light source 10 and the reducer 12 may be more closely disposed to the lens 3. In the present embodiment, the light source 10 and the reducer 12 is relatively positioned at the more front side than in a case of the first embodiment of the present invention.

The light emitted from the light source 10 passes through the first reducer lens 20 and then may be passed through the second reducer lens 25, the light path is changed in parallel to the optical axis X of the lens 3 by the reflecting member 29, and may be transmitted through the lens 3 and then may be emitted toward the first reflecting unit 2.

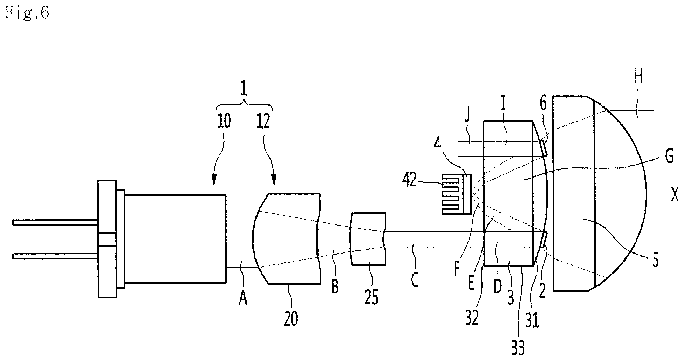

Fig. 6 is a construction view illustrating a lighting device for a vehicle according to a fourth embodiment of the present invention.

The present embodiment may include a second reflecting unit 6 which reflects light which reflects from the reflective fluorescent body 4 to the lens 3 to the rear side of the lens 3. Since the other constructions and the effects other than the second reflecting unit 6 and their effects are the same or similar to the first embodiment to third embodiment of the present invention, the other constructions other than the second reflecting unit 6 use the same numerical references as the first embodiment to third embodiment of the present invention and accordingly detailed description thereof will be omitted.

The second reflecting unit 6 may be provided to be spaced apart from the first reflecting unit 2 in the front surface 31 of the lens 3 and may reflect the light reflected from the reflective fluorescent body 4 in the rear side of the lens 3.

Each of the first reflecting unit 2 and the second reflecting unit 6 may be provided on the front surface of the lens 3.

The first reflecting unit 2 and the second reflecting unit 6 may have an arc shape as a cross-sectional shape on the convex front surface 31 of the lens 3, respectively.

The first reflecting unit 2 and the second reflecting unit 6 may have a concave mirror formed along the front surface 31 of the lens 3 on the convex front surface 31 of the lens 3, respectively.

The first reflecting unit 2 and the second reflecting unit 6 may be provided to be spaced apart with each other. The first reflecting unit 2 and the second reflecting unit 6 may be provided symmetrically relative to the optical axis X of the lens 3.

The first reflecting unit 2 and the second reflecting unit 6 may be provided symmetrically to have a 180° phase difference to the front surface 31 of the lens 3. In a case where the first reflecting unit 2 may be provided on the left area of the front surface 31 of the lens 3, the second reflecting unit 6 may be provided on the upper side area of the front surface 31 of the lens 3. In a case where the first reflecting unit 2 may be provided on the right area of the front surface 31 of the lens 3, the second reflecting unit 6 may be provided on the lower side area of the front surface 31 of the lens 3.

The first reflecting unit 2 and the second reflecting unit 6 may be provided at the same distance from the optical axis X of the lens with each other or at the different distance from the optical axis X of the lens with each other.

In a case where the first reflecting unit 2 and the second reflecting unit 6 is provided at the same distance from the optical axis X of the lens 3, any one of two reflecting unit may serves as the first reflecting unit 2, and the other of two reflecting unit may serves as the second reflecting unit 6. Convenience of the operator can be improved. Since two reflecting units need not distinguish from each other at the mounting or service of the lens 3.

The first distance between the first reflecting unit 2 and the optical axis X of the lens 3 may be shorter or longer than the second distance between the second reflecting unit 6 and the optical axis X of the lens 3. In this case, the light source device 1 may be installed in the position which any one of the two reflecting unit faces each other and the position which allows the lighting device for a vehicle to be made compact or allows the efficiency of the lighting device for a vehicle to be optimized. In a case where the light source device 1 faces any one of two reflecting units, the reflecting unit facing the light source device 1 serves as the first reflecting unit 2 and the reflecting unit which does not face the light source device 1 serves as the second reflecting unit 6.

The light source device 1 and the detecting unit 7 may be installed in the optimal position in which the efficiency of the lighting device for a vehicle can be increased.

The first reflecting unit 2 and the second reflecting unit 6 is made of a reflective coating layer coated on the portion other than the optical axis X of the lens 3 of the front surface of the lens 3 or is made of a reflective seat attached to the portion other than the optical axis X of the lens 3 of the front surface of the lens 3.

The first reflecting unit 2 may reflect light which is emitted from the light source device 1 and then is transmitted through the lens 3 to the reflective fluorescent body 4 the light reflected from the reflective fluorescent body 4 may be transmitted through the lens and a portion of the light reflected to the lens from reflective fluorescent body 4 may be incident on the second reflecting unit 6. The light which is incident from the reflective fluorescent body 4 to the second reflecting unit 6 may be reflected in the rear direction of the lens 3 by the second reflecting unit 6.

The light I reflected in the rear direction of the lens 3 by the second reflecting unit 6 transmits through the rear surface 32 of the lens 3 and the light J which is reflected from the second reflecting unit 6 and is transmitted through the rear surface 32 of the lens 3 may be radiated in the rear side of the lens 3.

The second reflecting unit 6 may minimize the light leak phenomenon which may be generated when the light which is reflected in the reflective fluorescent body 4 transmitted through the area on which the second reflecting unit 6 is formed.

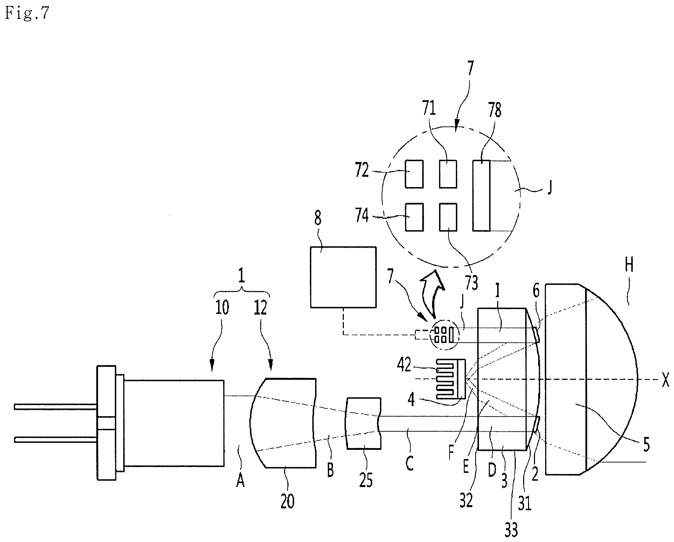

Fig. 7 is a construction view illustrating an optical path of the lighting device for a vehicle according to a fifth embodiment of the present invention.

The present embodiment may include a detecting unit 7 which detects light J reflected to the rear side of the lens 3 at the second reflecting unit 6, and a control unit 8 which controls the light source 10 according to the detection value of the detecting unit 7. Since the other constructions and the effects other than the detecting unit 7 and the control unit 8 are the same or similar to the fourth embodiment of the present invention, the other constructions other than the detecting unit 7 and the control unit 8 use the same numerical references as the fourth embodiment of the present invention. Accordingly, detailed description thereof will be omitted.

The detecting unit 7 may be disposed on the rear side of the lens 3. The detecting unit 7 is disposed outside of the optical axis X of the lens 3.

The detecting unit 7 may include a first filter 71 through which a blue light is transmitted, a first optical sensor 72 which detects light which transmits through the first filter 71, a second filter 73 which blocks the blue light, and a second optical sensor 74 which detects light which transmits through the second filter 73. Here, the blue light may means the blue based light.

The present embodiment may further include a third filter 78 which is disposed on the front side of the first filter 71 and the second filter 73 and detects light which is towards the first filter 71 and the second filter 73.

The control unit 8 may allow the light source device 1 to be turned off when the control unit 8 detects light which is greater than the reference value at the first optical sensor 72. The control unit 8 may allow the light source device 10 to be turned off when the control unit 8 detects light which is equal to and less than the reference value or does not detect light in the second optical sensor 74.

When the light which is greater than the reference value is detected at the first optical sensor 72, it may be meant that now, the reflective fluorescent body 4 does not converted the blue based light into the white based light or the degree of the conversion is insignificant. In this case, since the blue based light which exceeds the safety range may be emitted to the front side of a vehicle, the light source device 1, in particular the light source 10 may be turned off in order not to emit the blue based light in the front side of the vehicle.

Further, if the light which is less than and equal to the reference value is not detected at the second optical sensor 74, the reflective fluorescent body 4 does not normally function or the second reflecting unit 6 may be failed. In this case, since an optical conversion function by the reflective fluorescent body 4 or a safety function using the second reflecting unit 6, the detecting unit 7 and the control unit 8 is difficult to normally perform, the light source device 1, in particular the light source 10 may be turned off.

Although embodiments have been described with reference to a number of illustrative embodiments thereof, it should be understood that numerous other modifications and embodiments can be devised by those skilled in the art that will fall within the scope of the invention as defined by the appended claims.

## Claims

1. A lighting device for a vehicle comprising,
a light source (10);
a lens (3);
a first reflecting unit (2) provided in a partial area of a front surface of the lens;
a light reducer (12) provided in the light path between the light source (10) and the rear surface of the lens (3) and designed to reduce the size of the cross-section perpendicular to the optical axis of the beam of light emitted from the light source (10) and wherein the light transmitted through the light reducer (12) is incident on the first reflecting unit (2); and
a reflective fluorescent body (4) disposed on the side of the rear of the lens (3) and adapted to wavelength-convert light reflected from the first reflecting unit (2) and then reflect the light into the lens (3),
wherein the reflective fluorescent body (4) includes a reflecting unit for reflecting light and a wavelength conversion layer configured for wavelength-conversion of light.

2. The light device of a vehicle according to claim 1,
wherein the front surface of the lens (3) has a convex shape, and the first reflecting unit (2) has an arc-shaped cross section.

3. The light device of a vehicle according to claim 1 or 2,
wherein the first reflecting unit (2) is a concave mirror which is formed at the front surface of the lens (3).

4. The light device of a vehicle according to any one preceding claim,
wherein the first reflecting unit (2) is a reflective coating layer which is coated on a portion of the lens front surface spaced from an optical axis of the lens.

5. The light device of a vehicle according to any one preceding claim,
wherein the reflective fluorescent body (4) is disposed facing a rear surface of the lens (3) and is arranged to reflect the light toward the rear surface of the lens (3).

6. The light device of a vehicle according to any one preceding claim,
wherein the light reducer (12) is disposed between the lens (3) and the light source (10).

7. The light device of a vehicle according to any one preceding claim,
wherein the reflective fluorescent body (4) is disposed on an optical axis of the lens (3), and the light reducer (12) is spaced apart from the optical axis of the lens (3).

8. The light device of a vehicle according to any one preceding claim,
wherein the light reducer (12) is disposed at a rear side of the lens (3) and is arranged to emit the light in a direction parallel to an optical axis of the lens (3).

9. The light device of a vehicle according to any one preceding claim, wherein the light reducer (12) comprises:
a first reducer lens (20) designed to reduce the size of the cross-section perpendicular to the optical axis of the beam of light emitted from the light source (10) while the light emitted from the light source (10) travels through the first reducer lens (20); and
a second reducer lens (25) spaced apart from the first reducer lens (20) and designed to reduce the size of the cross-section perpendicular to the optical axis of the beam of light emitted from the first reducer lens (20) while the light emitted from the first reducer lens (20) travels through the second reducer lens (25).

10. The light device of a vehicle according to claim 9,
wherein an emitting surface of the first reducer lens (20) and an incident surface of the second reducer lens (25) are spaced apart from each other.

11. The light device of a vehicle according to claim 9 or 10,
wherein the second reducer lens (25) has a smaller diameter than the first reducer lens (20).

12. The light device of a vehicle according to any one of claims 9 to 11,
wherein the second reducer lens (25) has a smaller thickness than the first reducer lens (20).

13. The light device of a vehicle according to any one of claims 9 to 12,
wherein the incident surface on which light is incident of the first reducer lens (20) has a convex shape.

14. The light device of a vehicle according to any one of claims 9 to 13,
wherein the emitting surface from which light is emitted, of the second reducer lens (25) has a concave shape.

15. The light device of a vehicle according to any one of claims 9 to 14,
wherein an optical axis of the first reducer lens (20) and an optical axis of the second reducer lens (25) coincide.

## Patentansprüche

1. Beleuchtungsvorrichtung für ein Fahrzeug, umfassend:
eine Lichtquelle (10);
eine Linse (3);
eine erste reflektierende Einheit (2), die in einem Teilbereich einer Vorderseite der Linse vorgesehen ist;
einen Lichtreduzierer (12), der in dem Strahlengang zwischen der Lichtquelle (10) und der Rückseite der Linse (3) vorgesehen ist und dazu ausgelegt ist, die Größe des Querschnitts senkrecht zur optischen Achse des von der Lichtquelle (10) emittierten Lichtstrahls zu reduzieren, wobei das durch den Lichtreduzierer (12) übertragene Licht auf die erste reflektierende Einheit (2) fällt; und
einen reflektierenden fluoreszierenden Körper (4), der an der Rückseite der Linse (3) angeordnet ist und dazu ausgelegt, ist, eine Wellenlängenumwandlung von Licht, das von der ersten reflektierenden Einheit (2) reflektiert wird, auszuführen und dann das Licht in die Linse (3) zu reflektieren,
wobei der reflektierende fluoreszierende Körper (4) eine reflektierende Einheit zum Reflektieren von Licht und eine Wellenlängenumwandlungsschicht enthält, die zur Wellenlängenumwandlung von Licht eingerichtet ist.

2. Beleuchtungsvorrichtung eines Fahrzeugs nach Anspruch 1,
wobei die Vorderseite der Linse (3) eine konvexe Form aufweist und die erste reflektierende Einheit (2) einen bogenförmigen Querschnitt aufweist.

3. Beleuchtungsvorrichtung eines Fahrzeugs nach Anspruch 1 oder 2,
wobei die erste reflektierende Einheit (2) ein konkaver Spiegel ist, der an der Vorderseite der Linse (3) ausgebildet ist.

4. Beleuchtungsvorrichtung eines Fahrzeugs nach einem der vorhergehenden Ansprüche,
wobei die erste reflektierende Einheit (2) eine reflektierende Beschichtungsschicht ist, die auf einen Teil der Linsenvorderseite aufgetragen ist, der von einer optischen Achse der Linse beabstandet ist.

5. Beleuchtungsvorrichtung eines Fahrzeugs nach einem der vorhergehenden Ansprüche,
wobei der reflektierende fluoreszierende Körper (4) gegenüber einer Rückseite der Linse (3) angeordnet ist und eingerichtet ist, um das Licht zur Rückseite der Linse (3) zu reflektieren.

6. Beleuchtungsvorrichtung eines Fahrzeugs nach einem der vorhergehenden Ansprüche,
wobei der Lichtreduzierer (12) zwischen der Linse (3) und der Lichtquelle (10) angeordnet ist.

7. Beleuchtungsvorrichtung eines Fahrzeugs nach einem der vorhergehenden Ansprüche,
wobei der reflektierende fluoreszierende Körper (4) auf einer optischen Achse der Linse (3) angeordnet ist und der Lichtreduzierer (12) von der optischen Achse der Linse (3) beabstandet ist.

8. Beleuchtungsvorrichtung eines Fahrzeugs nach einem der vorhergehenden Ansprüche,
wobei der Lichtreduzierer (12) an einer Rückseite der Linse (3) angeordnet ist und eingerichtet ist, um das Licht in einer Richtung parallel zu einer optischen Achse der Linse (3) zu emittieren.

9. Beleuchtungsvorrichtung eines Fahrzeugs nach einem der vorhergehenden Ansprüche, wobei der Lichtreduzierer (12) umfasst:
eine erste Reduzierlinse (20), die dazu ausgelegt ist, die Größe des Querschnitts senkrecht zur optischen Achse des von der Lichtquelle (10) emittierten Lichtstrahls zu reduzieren, während das von der Lichtquelle (10) emittierte Licht durch die erste Reduzierlinse (20) hindurchtritt; und
eine zweite Reduzierlinse (25), die von der ersten Reduzierlinse (20) beabstandet ist und dazu ausgelegt ist, die Größe des Querschnitts senkrecht zur optischen Achse des Lichtstrahls zu reduzieren, der von der ersten Reduzierlinse (20) emittiert wird, während das Licht, das von der ersten Reduzierlinse (20) emittiert wird, durch die zweite Reduzierlinse (25) hindurchtritt.

10. Beleuchtungsvorrichtung eines Fahrzeugs nach Anspruch 9,
wobei eine emittierende Oberfläche der ersten Reduzierlinse (20) und eine Einfallsfläche der zweiten Reduzierlinse (25) voneinander beabstandet sind.

11. Beleuchtungsvorrichtung eines Fahrzeugs nach Anspruch 9 oder 10,
wobei die zweite Reduzierlinse (25) einen kleineren Durchmesser als die erste Reduzierlinse (20) aufweist.

12. Beleuchtungsvorrichtung eines Fahrzeugs nach einem der Ansprüche 9 bis 11, wobei die zweite Reduzierlinse (25) eine geringere Dicke als die erste Reduzierlinse (20) aufweist.

13. Beleuchtungsvorrichtung eines Fahrzeugs nach einem der Ansprüche 9 bis 12,
wobei die Einfallsfläche der ersten Reduzierlinse (20), auf die Licht einfällt, eine konvexe Form aufweist.

14. Beleuchtungsvorrichtung eines Fahrzeugs nach einem der Ansprüche 9 bis 13,
wobei die emittierende Oberfläche der zweiten Reduzierlinse (25), von der Licht emittiert wird, eine konkave Form aufweist.

15. Beleuchtungsvorrichtung eines Fahrzeugs nach einem der Ansprüche 9 bis 14,
wobei eine optische Achse der ersten Reduzierlinse (20) und eine optische Achse der zweiten Reduzierlinse (25) zusammenfallen.

## Revendications

1. Dispositif d'éclairage pour un véhicule comprenant,
une source de lumière (10) ;
une lentille (3) ;
une première unité réfléchissante (2) prévue dans une zone partielle d'une surface avant de la lentille ;
un réducteur de lumière (12) prévu dans le chemin de lumière entre la source de lumière (10) et la surface arrière de la lentille (3) et conçu pour réduire la taille de la section transversale perpendiculaire à l'axe optique du faisceau de lumière émis depuis la source de lumière (10) et dans lequel la lumière transmise à travers le réducteur de lumière (12) est incidente sur la première unité réfléchissante (2) ; et
un corps fluorescent réfléchissant (4) disposé sur le côté de l'arrière de la lentille (3) et adapté à convertir en longueur d'onde une lumière réfléchie depuis la première unité réfléchissante (2) et ensuite à réfléchir la lumière jusque dans la lentille (3),
dans lequel le corps fluorescent réfléchissant (4) inclut une unité réfléchissante pour réfléchir une lumière et une couche de conversion de longueur d'onde configurée pour une conversion en longueur d'onde de lumière.

2. Dispositif d'éclairage d'un véhicule selon la revendication 1,
dans lequel la surface avant de la lentille (3) a une forme convexe, et la première unité réfléchissante (2) a une section transversale en forme d'arc de cercle.

3. Dispositif d'éclairage d'un véhicule selon la revendication 1 ou 2,
dans lequel la première unité réfléchissante (2) est un miroir concave qui est formé au niveau de la surface avant de la lentille (3).

4. Dispositif d'éclairage d'un véhicule selon une quelconque revendication précédente,
dans lequel la première unité réfléchissante (2) est une couche de revêtement réfléchissante qui est revêtue sur une partie de la surface avant de lentille espacée d'un axe optique de la lentille.

5. Dispositif d'éclairage d'un véhicule selon une quelconque revendication précédente,
dans lequel le corps fluorescent réfléchissant (4) est disposé face à une surface arrière de la lentille (3) et est agencé pour réfléchir la lumière vers la surface arrière de la lentille (3).

6. Dispositif d'éclairage d'un véhicule selon une quelconque revendication précédente,
dans lequel le réducteur de lumière (12) est disposé entre la lentille (3) et la source de lumière (10).

7. Dispositif d'éclairage d'un véhicule selon une quelconque revendication précédente,
dans lequel le corps fluorescent réfléchissant (4) est disposé sur un axe optique de la lentille (3), et le réducteur de lumière (12) est espacé de l'axe optique de la lentille (3).

8. Dispositif d'éclairage d'un véhicule selon une quelconque revendication précédente,
dans lequel le réducteur de lumière (12) est disposé au niveau d'un côté arrière de la lentille (3) et est agencé pour émettre la lumière dans un sens parallèle à un axe optique de la lentille (3).

9. Dispositif d'éclairage d'un véhicule selon une quelconque revendication précédente,
dans lequel le réducteur de lumière (12) comprend :
une première lentille (20) de réducteur conçue pour réduire la taille de la section transversale perpendiculaire à l'axe optique du faisceau de lumière émis depuis la source de lumière (10) tandis que la lumière émise depuis la source de lumière (10) passe à travers la première lentille (20) de réducteur ; et
une deuxième lentille (25) de réducteur espacée de la première lentille (20) de réducteur et conçue pour réduire la taille de la section transversale perpendiculaire à l'axe optique du faisceau de lumière émis depuis la première lentille (20) de réducteur tandis que la lumière émise depuis la première lentille (20) de réducteur passe à travers la deuxième lentille (25) de réducteur.

10. Dispositif d'éclairage d'un véhicule selon la revendication 9,
dans lequel une surface émettrice de la première lentille (20) de réducteur et une surface incidente de la deuxième lentille (25) de réducteur sont espacées l'une de l'autre.

11. Dispositif d'éclairage d'un véhicule selon la revendication 9 ou 10,
dans lequel la deuxième lentille (25) de réducteur a un diamètre plus petit que la première lentille (20) de réducteur.

12. Dispositif d'éclairage d'un véhicule selon l'une quelconque des revendications 9 à 11,
dans lequel la deuxième lentille (25) de réducteur a une épaisseur plus petite que la première lentille (20) de réducteur.

13. Dispositif d'éclairage d'un véhicule selon l'une quelconque des revendications 9 à 12,
dans lequel la surface incidente sur laquelle une lumière est incidente de la première lentille (20) de réducteur a une forme convexe.

14. Dispositif d'éclairage d'un véhicule selon l'une quelconque des revendications 9 à 13,
dans lequel la surface émettrice depuis laquelle la lumière est émise, de la deuxième lentille (25) de réducteur a une forme concave.

15. Dispositif d'éclairage d'un véhicule selon l'une quelconque des revendications 9 à 14,
dans lequel un axe optique de la première lentille (20) de réducteur et un axe optique de la deuxième lentille (25) de réducteur coïncident.
